# EUROPÄISCHE PATENTANMELDUNG

(11) **EP 2 722 497 A1**
(43) Veröffentlichungstag der Anmeldung: **23.04.2014**
(21) Anmeldenummer: 12189059.4
(22) Anmeldetag: 18.10.2012
(51) Int. Cl.: F01K 13/02, F01K 23/00, H02J 3/38

(54) **Kraftwerksanlage**

(71) Anmelder: Wimmer, Martin F., 81827 München (DE)
(72) Erfinder: Wimmer, Martin F., 81827 München (DE)
(74) Vertreter: Tergau & Walkenhorst

(57) **Zusammenfassung**

Eine Stationäre Kraftwerksanlage (1) zur Stromerzeugung mit einer ersten, zur Umwandlung von natürlicherweise vorhandener Energie wie beispielsweise Wind-, Sonnen-, Wärme- oder Wasserenergie in elektrischen Strom ausgestalteten Energiewandlereinheit (2), die sekundärseitig über eine Stromeinspeiseleitung (12) an ein Energieversorgungsnetz (14) angeschlossen ist, soll derart weitergebildet werden, dass mit hoher Zuverlässigkeit und in einem vergleichsweise großen Parameterbereich auf besonders günstige Weise die in das Energieversorgungsnetz eingespeiste elektrische Leistung weitgehend konstant gehalten werden kann. Dazu umfasst die Kraftwerksanlage (1) erfindungsgemäß eine zweite Energiewandlereinheit (20), die zur Umwandlung von in einem Brennstoff enthaltener Energie in elektrischen Strom einen von einem Verbrennungsmotor (22) angetriebenen Generator (26) umfasst, der ausgangsseitig ebenfalls an das Energieversorgungsnetz (14) angeschlossen ist, und eine Steuerungseinheit (60), die den Brennstoffzustrom in den der zweiten Energiewandlereinheit (20) zugeordneten Verbrennungsmotor (22) in Abhängigkeit von der von der ersten Energiewandlereinheit (2) über die Stromeinspeiseleitung (12) abgegebenen elektrischen Leistung einstellt.

## Beschreibung

Die Erfindung bezieht sich auf eine insbesondere stationäre Kraftwerksanlage zur Stromerzeugung mit einer zur Umwandlung von natürlicherweise vorhandener Energie wie beispielsweise Wind-, Sonnen-, Wärme- oder Wasserenergie in elektrischen Strom ausgestalteten Energiewandlereinheit, die sekundärseitig über eine Stromeinspeiseleitung an ein Energieversorgungsnetz angeschlossen ist.

Derartige Kraftwerksanlagen kommen üblicherweise bei der Nutzung sogenannter regenerativer Energien zum Einsatz, bei denen unter Rückgriff auf natürlicherweise vorkommende Energieformen wie insbesondere Windenergie, Sonnenenergie, Wärmeenergie oder Wasserenergie elektrischer Strom erzeugt und in das Strom- oder Energieversorgungsnetz eingespeist wird. Derartige Anlagen können je nach Auslegung und Anwendungsfall in der Art dezentraler, vergleichsweise kleiner Einheiten oder auch als Großanlagen konzeptioniert und eingesetzt sein.

Grundsätzlich besteht beim Rückgriff auf regenerative Energieträger jedoch das Problem, dass die natürlicherweise vorkommenden Energieformen vergleichsweise starken Schwankungen unterliegen und in erheblichem Maße von sich ständig verändernden Umgebungsbedingungen abhängen. Beispielsweise sind Windkraftanlagen starken wetterbedingten Schwankungen unterworfen, und Photovoltaikanlagen oder Sonnenenergieanlagen sind in erheblichem Maße vom Sonnenstand und der aktuell vorliegenden Bewölkungssituation abhängig. Dementsprechend ist die von derartigen regenerativen Kraftwerksanlagen ausgangsseitig gelieferte und in das Energieversorgungsnetz eingespeiste elektrische Leistung ebenfalls starken Schwankungen unterworfen. Daher müssen vergleichsweise große Anstrengungen unternommen werden, um das Energieversorgungsnetz stabil zu halten und den durch die Verbraucher bedingten Lastanforderungen genüge zu tun.

Aus diesem Grund ist beispielsweise im Gesetz über erneuerbare Energien vorgeschrieben, dass die Einspeiseleistung von Kraftwerksanlagen, die mit Hilfe erneuerbarer Energiequellen betrieben werden und eine vorbestimmte Anlagenleistung überschreiten, durch den Stromnetzbetreiber im Bedarfsfall angepasst werden kann. Damit soll erreicht werden, dass der Stromnetz-Betreiber im Bedarfsfall die von der jeweiligen Anlage ins Netz eingespeiste elektrische Leistung drosseln oder zurückfahren kann, um somit im Hinblick auf die anderen Einspeiser und auf den aktuellen Verbrauchszustand das Netz stabil halten zu können. Alternativ oder zusätzlich kann vorgesehen sein, dass mit erneuerbaren oder regenerativen Energien betriebene Kraftwerksanlagen mit geeigneten Speichermedien versehen sind, die bei günstigen Umgebungs- oder Wetterbedingungen erzeugte, aktuell im Netz nicht verbrauchte Mehrleistung geeignet zwischenspeichern und zu einem späteren Zeitpunkt, bei dem umweltbedingt nur eine verringerte elektrische Leistung erzeugt werden kann, ins Netz einspeisen. Dennoch bleibt bei derartigen, mit regenerativen Energien betriebenen Kraftwerksanlagen das grundsätzliche Problem bestehen, dass aufgrund der starken Schwankungen in den Umgebungsbedingungen die erreichbaren Wirkungsgrade bei der Energieerzeugung noch steigerungsbedürftig sind.

Der Erfindung liegt daher die Aufgabe zugrunde, eine stationäre Kraftwerksanlage der oben genannten Art, die zur Umwandlung von regenerativen oder erneuerbaren Energien wie beispielsweise Wind-, Sonnen-, Wärme- oder Wasserenergie in elektrischen Strom ausgelegt ist, derart weiterzubilden, dass mit hoher Zuverlässigkeit und in einem vergleichsweise großen Parameterbereich auf besonders günstige Weise die in das Energieversorgungsnetz eingespeiste elektrische Leistung weitgehend konstant gehalten werden kann.

Diese Aufgabe wird erfindungsgemäß gelöst, indem zusätzlich zur ersten, zur Umwandlung von natürlicherweise vorhandener Energie wie beispielsweise Wind-, Sonnen-, Wärme- oder Wasserenergie in elektrischem Strom ausgestalteten Energiewandlereinheit noch eine zweite Energiewandlereinheit vorgesehen ist, die zur Umwandlung von in einem Brennstoff enthaltener Energie in elektrischen Strom einen von einem Verbrennungsmotor angetriebenen Generator umfasst, der ausgangsseitig ebenfalls an das Energieversorgungsnetz angeschlossen ist, wobei eine Steuerungseinheit, die den Brennstoffzustrom in den der zweiten Energiewandlereinheit zugeordneten Verbrennungsmotor in Abhängigkeit von der von der ersten Energiewandlereinheit über die Stromeinspeiseleitung abgegebenen elektrischen Leistung einstellt.

Die Erfindung geht dabei von der Überlegung aus, dass auch in einer Kraftwerksanlage unter Rückgriff auf die prinzipbedingt starken Schwankungen unterworfenen regenerativen oder erneuerbaren Energiequellen auf besonders zuverlässige und effiziente Weise eine nahezu konstante Leistungsabgabe bei der Einspeisung in das Energieversorgungsnetz erreichbar ist, indem zusätzlich zur ersten, auf die Nutzung der regenerativen Energiequelle ausgerichteten Energiewandlereinheit noch eine zweite, mit schwankungsunabhängiger Technologie betriebene Energiewandlereinheit vorgesehen ist, die die von der ersten Energiewandlereinheit in das Netz eingespeiste elektrische Leistung bedarfsgerecht ergänzt. Die zweite Energiewandlereinheit sollte daher geeignet dafür ausgelegt sein, zusätzlich zur ersten Energiewandlereinheit jeweils derart viel elektrische Leistung zu erzeugen und zur Einspeisung in das Netz bereitzuhalten, dass die insgesamt von beiden Energiewandlereinheiten in das Netz abgegebene elektrische Leistung - innerhalb der technologisch realisierbaren Grenzen und Toleranzen - annähernd konstant bleibt und den Wert einer beispielsweise extern vorgegebenen Soll-Leistung einhält.

Zu diesem Zweck soll, gerade im Hinblick auf die erreichbaren Reaktionszeiten und die Genauigkeit bei der Ansteuerung, die zweite Energiewandlereinheit unter Rückgriff auf die Verbrennungsmotorentechnologie ausgestaltet sein. Zur Koordinierung und Ansteuerung der genannten Einheiten sollte zudem eine Steuerungseinheit vorgesehen sein, die signaleingangsseitig mit einem an der der ersten Energiewandlereinheit zugeordneten Stromeinspeiseleitung angeordneten Sensor zur Ermittlung der von der ersten Energiewandlereinheit in das Energieversorgungsnetz abgegebenen elektrischen Leistung verbunden ist. Anhand der dabei ermittelten, von der ersten Energiewandlereinheit aktuell in das Netz eingespeisten elektrischen Ist-Leistung kann sodann innerhalb der Steuerungseinheit durch Vergleich mit einer dort hinterlegten, geeignet vorgegebenen einzuspeisenden Soll-Leistung der Fehlbetrag oder das Maß an Unterdeckung der aktuell ins Netz eingespeisten elektrischen Leistung ermittelt werden. Abhängig von diesem Fehlbetrag steuert die Steuerungseinheit sodann geeignete Drosselelemente wie beispielsweise Einspritzsysteme, Ventile oder dergleichen im Brennstoff-Versorgungssystem des Verbrennungsmotors derart an, dass die zweite Energiewandlereinheit den ermittelten Fehlbetrag an elektrischer Leistung in das Netz einspeist und somit die abgegebene Leistung geeignet auf den Sollwert hin kompensiert.

Die zweite Energiewandlereinheit kann dazu direkt, insbesondere über eine eigene Stromeinspeiseleitung, mit dem Netz verbunden sein. Vorteilhafterweise ist der Generator der zweiten Energiewandlereinheit ausgangsseitig aber mit der Stromeinspeiseleitung der ersten Energiewandlereinheit und über diese mit dem Netz verbunden. Eine derartige Auslegung ist in besonderem Maße für Nachrüstsysteme vorteilhaft, bei der bereits bestehende regenerative Kraftwerksanlagen zur Verbesserung ihres Einsatzspektrums mit der jeweiligen zweiten Energiewandlereinheit ergänzt werden. Insbesondere bei einer derartigen Nachrüstung kann die Verbindung der zweiten Energiewandlereinheit mit dem Netz besonders ressourcenschonend und damit effizient unter Rückgriff auf bereits bestehende Infrastruktur, besonders vorteilhaft die in diesem Fall bereits existierende Stromeinspeiseleitung der ersten Energiewandlereinheit, erfolgen.

Der als Führungsgröße für die Stromeinspeisung insgesamt und somit auch für die Ansteuerung der zweiten Energiewandlereinheit zugrundegelegte Sollwert für die in das Netz einzuspeisende Gesamtleistung (oder entsprechend: den einzuspeisenden Gesamtstrom) kann dabei ein beispielsweise in der Steuerungseinheit fest hinterlegter oder in dieser abspeicherbarer und vom Bedienpersonal "vor Ort" veränderbarer Sollwert sein. Besonders vorteilhaft ist die Steuerungseinheit aber in der Art eines Netzverbundes signaleingangsseitig mit einem (insbesondere räumlich über den lokalen Einsatzort der Anlage hinausgehenden) Datennetz verbunden, über das der Sollwert auch von der Ferne aus in der Art eines Fernzugriffs in die Steuerungseinheit eingegeben werden kann. Damit kann der Sollwert bedarfsabhängig im Sinne eines überörtlichen Netzmanagements von einer überörtlichen Steuerungszentrale, von der aus vorzugsweise eine Mehrzahl von Kraftwerksanlagen der genannten Art gemeinsam und abgestimmt aufeinander gesteuert werden, jeweils aktualisiert vorgegeben und eingestellt werden. Damit und ggf. über eine geeignete zusätzliche zentrale Kontroll- und Regelfunktion der Steuereinheit kann beispielsweise ein Energieversorgungsunternehmen eine oder mehrere Kraftwerksanlagen der genannten Art gesamtheitlich oder als Verbund derart ansteuern, dass eine bedarfsgerechte, falls gewünscht auf das Gesamtnetz bezogene konstante Energieversorgung gewährleistet ist.

Gerade um auch in diesen Fällen eine besonders bedarfsgerechte Steuerung der zweiten Energiewandlereinheit zu ermöglichen, stellt die Steuerungseinheit vorteilhafterweise den Brennstoffzustrom in den Verbrennungsmotor auch in Abhängigkeit von der von der zweiten Energiewandlereinheit in das Netz abgegebenen elektrischen Leistung und/oder unter Berücksichtigung des extern über das Datennetz an die Steuerungseinheit übergegebenen Sollwerts ein. Durch diese bevorzugte Ausgestaltung entsteht somit eine Feedback-Schleife oder ein Regelkreis hinsichtlich der Ansteuerung des Brennstoffzustroms.

In besonders vorteilhafter Ausgestaltung ist die den Verbrennungsmotor enthaltende zweite Energiewandlereinheit als Blockheizkraftwerk ausgestaltet. Als Blockheizkraftwerke werden üblicherweise kleinere motorisch betriebene Heizkraftwerke bezeichnet, deren Motoren in der Regel Verbrennungskraftmaschinen sind. Während des Betriebs entstehende Abwärme der Motoren wird dabei über einen Wärmetauscher zu Heizzwecken verwendet, die mechanische Energie wird hingegen von einem Generator in elektrische Energie umgewandelt. Die dabei erzeugte Wärme wird somit beispielsweise unmittelbar am Standort des Blockheizkraftwerks verbraucht oder aber als Nutzwärme in ein Nahwärmenetz oder ein Fernwärmenetz eingespeist. Alternativ oder zusätzlich kann die Abwärme auch über einen ORC-Prozeß ("organic Rankine cycle") in elektrische Energie umgewandelt werden. Die Arbeitsweise eines Blockheizkraftwerks beruht somit auf dem Prinzip der Kraft-Wärme-Kopplung.

Blockheizkraftwerke dienen also in der Regel der gleichzeitigen Produktion von Wärme und elektrischer Energie. Dabei wird ein Brennstoff, beispielsweise Erdgas, "Compressed Natural Gas" (CNG), Wasserstoff, Flüssiggas, andere Gassorten, Heizöl, Kohle, Biogas, Pflanzenöl oder Biodiesel in dem Verbrennungsmotor in Wärme und in mechanischer Arbeit umgewandelt, wobei letztere wiederum im Generator in elektrische Energie transformiert wird. Vorteilhafterweise ist somit der Verbrennungsmotor der zweiten Energiewandlereinheit zum Betrieb mit Heizöl, Flüssiggas, Pflanzenöl, Erdgas und/oder Biogas ausgelegt.

Gerade unter ökologischen Aspekten ist dabei ein Betrieb des Verbrennungsmotors der zweiten Energiewandlereinheit mit Biogas besonders bevorzugt. In vorteilhafter Ausgestaltung ist daher der Verbrennungsmotor der zweiten Energiewandlereinheit brennstoffeingangsseitig mit einem Biogas-Erzeuger verbunden. Hierbei sollte jedoch berücksichtigt werden, dass die in Verbindung mit Blockheizkraftwerken üblicherweise zum Einsatz kommenden Biogasanlagen, in denen das Brenngas für den Verbrennungsmotor des Blockheizkraftwerks hergestellt wird, in ihrer Reaktionszeit hinsichtlich der Produktionsrate des Biogases vergleichsweise träge sind. Insbesondere basieren derartige Biogasanlagen üblicherweise auf einem in der Biogasanlage ablaufenden Gärprozess, so dass sich eine Reaktion auf eine Verringerung oder auch auf eine Steigerung dieses Gärprozesses in der Biogasanlage jeweils erst eine geraume Zeitspanne, beispielsweise einige Tage, später einstellt. Beispielsweise hat eine Reduzierung der Fütterung erst nach einigen Tagen einen nachhaltigen Einfluss auf die Erzeugung der Biogasmenge.

In besonders vorteilhafter Ausgestaltung ist daher bei der für eine Nutzung von Biogas ausgelegten zweiten Energiewandlereinheit in die Verbindungsleitung zwischen dem Biogas-Erzeuger und dem Verbrennungsmotor ein Pufferspeichertank für Biogas geschaltet. Damit ist erreicht, dass selbst im Hinblick auf den schwankenden Bedarf bei der Leistungsabgabe der zweiten Energiewandlereinheit auch die dieser brennstoffseitig vorgestaltete Biogasanlage mit annähernd konstanten Betriebsbedingungen betrieben werden kann. Das erzeugte Biogas wird dabei zunächst in den Pufferspeichertank geleitet und dort für eine spätere Entnahme bereitgehalten. Aus diesem Pufferspeichertank wird das Biogas sodann im Bedarfsfall entnommen und dem Verbrennungsmotor der zweiten Energiewandlereinheit als Brennstoff zugeführt, wenn aus betrieblichen Gründen und im Hinblick auf die gewünschte Abgabe elektrischer Leistung an das Energieversorgungsnetz ein Betrieb der zweiten Energiewandlereinheit betrieblich gewünscht oder erforderlich ist.

In besonders vorteilhafter Ausgestaltung ist der Verbrennungsmotor der als Blockheizkraftwerk ausgestalteten zweiten Energiewandlereinheit als sogenannte multikraftstofffähige Einheit ausgeführt, die mit verschiedenartigen Brennstoffen bespeist werden kann. Zusätzlich zum vorzugsweise vorgesehenen Biogas als Brennstoff ist der Verbrennungsmotor vorteilhafterweise für Heizöl, Flüssiggas, Pflanzenöl und/oder für Erdgas als zusätzlichen Kraftstoff geeignet ausgelegt. Dementsprechend ist in vorteilhafter Ausgestaltung der Verbrennungsmotor brennstoffeingangsseitig mit einem Speichertank für Heizöl, Flüssiggas, Pflanzenöl und/oder mit einem Speichertank für Erdgas verbunden.

In der genannten besonders vorteilhaften Ausgestaltung ist der Verbrennungsmotor der zweiten Energiewandlereinheit somit brennstoffeingangsseitig an eine Mehrzahl von Brennstoffzuleitungen angeschlossen, die voneinander unterschiedliche Brennstoffe führen. Vorteilhafterweise ist dabei in jede Brennstoffzuleitung jeweils ein eigenständig ansteuerbares Stellventil gestaltet, wobei die Steuerungseinheit signalausgangsseitig mit jedem der Stellventile verbunden ist. Über die Steuerungseinheit kann somit betriebszustands- und solllastabhängig gezielt eine für den jeweiligen Bedarfszustand besonders geeignete Brennstoffart ausgewählt und der Verbrennungsmotor mit dieser in einer bedarfsgerecht angepassten Menge beaufschlagt werden. Insbesondere stellt die Steuerungseinheit dabei in vorteilhafter Ausgestaltung das Verhältnis der dem Verbrennungsmotor zugeführten unterschiedlichen Brennstoffe in Abhängigkeit von der von der ersten Energiewandlereinheit über die Stromspeiseeinleitung abgegeben elektrischen Leistung ein.

Die mit der Erfindung erzielten Vorteile bestehen insbesondere darin, dass durch die Kombination der ersten, auf die Nutzung regenerativer oder erneuerbare Energien ausgerichteten Energiewandlereinheit mit der zweiten, auf die Nutzung eines Verbrennungsmotors ausgerichteten Energiewandlereinheit eine Kraftwerksanlage bereitgestellt werden kann, mit der einerseits die üblicherweise stark schwankenden regenerativen Energiequellen besonders wirksam und weitgehend zur Erzeugung elektrischer Energie genutzt werden können, wobei dennoch eine vergleichsweise konstante Leistungsabgabe in das Energieversorgungsnetz eingehalten werden kann. In der Art einer Ergänzung zum vorhandenen Potenzial der regenerierbaren Energiequelle kann dabei durch den Rückgriff auf den Verbrennungsmotor elektrische Zusatzleistung im gewünschten Maß oder im gewünschten Umfang mit hoher Flexibilität und bei hohem Wirkungsgrad bereitgestellt werden.

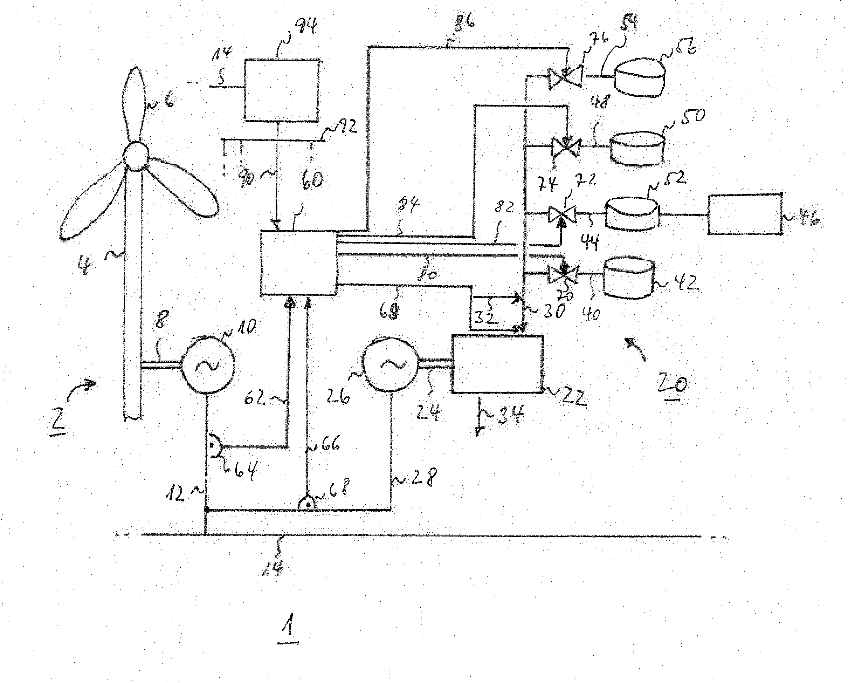

Ein Ausführungsbeispiel der Erfindung wird anhand einer Zeichnung näher erläutert. Darin zeigt die Figur eine stationäre Kraftwerksanlage zur Stromerzeugung.

Die stationäre Kraftwerksanlage 1 umfasst eine erste Energiewandlereinheit 2, die zur Nutzung einer erneuerbaren oder regenerativen Energiequelle wie beispielsweise Wind-, Sonnen-, Wärme- oder Wasserenergie zur Erzeugung elektrischen Stroms ausgestaltet ist. Im Ausführungsbeispiel umfasst die erste Energiewandlereinheit 2 dabei ein Windrad 4, das in an sich bekannter Weise einen windgetriebenen Rotor 6 aufweist. Anstelle des Windrads 4 können selbstverständlich andere geeignete Anlagen zur Nutzung regenerative Energien wie beispielsweise Photovoltaikanlagen, sonstige Sonnenenergieanlagen, Wärmeenergieanlagen oder Wasserenergieanlagen oder auch eine Kombination einiger oder mehrerer dieser Anlagentypen vorgesehen sein.

Das im Ausführungsbeispiel stellvertretend für diese Anlagentypen gezeigte Windrad 4 ist über eine Antriebswelle 8 mit einem Generator 10 verbunden, der die windgetriebene Rotation des Rotors 6 in elektrische Leistung umsetzt. Der Generator 10 und mit dieser die erste Energiewandlereinheit 2 insgesamt ist sekundärseitig über eine Stromeinspeiseleistung 12 an ein Energieversorgungsnetz 14 angeschlossen.

Bei der Auslegung der Kraftwerksanlage 1 ist gezielt dem Umstand Rechnung getragen, dass die in der ersten Energiewandlereinheit 2 zur Nutzung vorgesehenen regenerativen oder erneuerbaren Energiequellen üblicherweise stark von den Umgebungsbedingungen abhängen und daher erheblichen Schwankungen unterliegen können. Um dennoch unter Rückgriff auf die genannten erneuerbaren oder regenerativen Energiequellen eine bedarfsgerecht steuerbare oder gegebenenfalls auch konstante Leistungsabgabe bei der Stromeinspeisung in das Energieversorgungsnetz 14 her zu stellen, ist in der Kraftwerksanlage 1 die erste Energiewandlereinheit 2 durch eine zweite Energiewandlereinheit 20 ergänzt.

Die zweite Energiewandlereinheit 20 ist zur Umwandlung von in einem Brennstoff enthaltener Energie in elektrischen Strom ausgelegt und umfasst einen Verbrennungsmotor 22. Dieser treibt im Ausführungsbeispiel über eine Antriebswelle 24, alternativ aber auch kraftschlüssig oder direkt mit der Kurbelwelle verbunden, einen Generator 26 an. Dieser könnte sekundärseitig über eine separate, zweite Stromeinspeiseleitung ebenfalls an das Energieversorgungsnetz 14 angeschlossen sein. Im Ausführungsbeispiel ist aber als bevorzugte Variante der Fall gezeigt, der insbesondere für Nachrüstsysteme für bereits bestehende regenerative Energieerzeugungsanlagen vorteilhaft ist. Dabei ist der Gererator 26 sekundärseitig über eine Zwischenleitung 28 mit der Stromeinspeiseleitung 12 und über diese mit dem Energieversorgungsnetz 14 verbunden.

Eingangsseitig ist der Verbrennungsmotor 22 an eine Brennstoffzuführleitung eines Brennstoffzuführsystems 30 angeschlossen, das als weitere Komponenten unter anderem eine Kraftstoff-Einspritzanlage und eine Luft-Zuführungsleitung 32 zur Mischung von Verbrennungsluft in den Brenngasstrom für den Verbrennungsmotor 22 umfasst. Durch geeignete, im Ausführungsbeispiel nicht dargestellte, an sich aber übliche Stellmittel wie beispielsweise Ventile, die Kraftstoff-Einspritzanlage oder dergleichen ist dabei das Brennstoff/Luft-Gemisch in dem dem Verbrennungsmotor 22 zugeführten Brenngasgemisch bedarfsgerecht und geeignet einstellbar. Ausgangsseitig ist an den Verbrennungsmotor 22 eine Abgasleitung 34 angeschlossen. Die den Verbrennungsmotor 22 umfassende zweite Energiewandlereinheit 20 ist im Ausführungsbeispiel als Blockheizkraftwerk und damit zur gleichzeitigen Produktion von Wärme und elektrischer Energie ausgestaltet. Zu diesem Zweck ist die Abgasleitung 34 auf im Ausführungsbeispiel nicht näher dargestellte Weise mit nachgeordneten Wärmetauschersystemen und dergleichen verbunden, die eine Nutzung der im Abgasstrom aus dem Verbrennungsmotor 22 mitgeführten Wärme, beispielsweise in einem Verbraucher vor Ort, in einem Nahwärmenetz oder in einem Fernwärmenetz, ermöglicht. Die als Blockheizkraftwerk ausgestaltete zweite Energiewandlereinheit 20 arbeitet somit nach dem Prinzip der Kraft-Wärme-Kopplung.

Der Verbrennungsmotor 22 ist als sogenannter Einspritzmotor ausgeführt und mit einem elektronisch gesteuerten Einspritzsystem versehen, über das das über die Brennstoffleitung 30 zugeführte Brennstoff-Luft-Gemisch oder Brenngas in die Brennkammer des Verbrennungsmotors 22 eingespeist wird. Zudem ist der Verbrennungsmotor 22 und mit diesem das die zweite Energiewandlereinheit 20 bildende Blockheizkraftwerk als sogenannte multikraftstofffähige Einheit ausgeführt, die mit verschiedenen Brennstoffarten betrieben werden kann.

Im Ausführungsbeispiel ist dabei ein Betrieb des Verbrennungsmotors 22 mit den Brennstoffarten Heizöl, Flüssiggas, Pflanzenöl, Biogas oder Erdgas vorgesehen, wobei alternativ auch eine geeignet gewählte Mischung dieser Brennstoffe verwendet werden könnte. Dementsprechend ist der Verbrennungsmotor 22 brennstoffeingangsseitig über die Brennstoffzuführleitung 30 über eine Zweigleitung 40 mit einem Erdgastank 42, über eine Zweigleitung 44 mit einer Biogasanlage 46 und über eine Zweigleitung 48 mit einem Speichertank 50 für Pflanzenöl verbunden.

Im Hinblick auf die als einer der genannten Optionen vorgesehene Betriebsweise des Verbrennungsmotors 22 mit Biogas ist zudem dem Umstand Rechnung getragen, dass die in der Biogasanlage 46 ablaufenden Prozesse zur Herstellung von Biogas vergleichsweise träge sind, so dass Veränderungen in der Erzeugungsrate des Biogases nur mit vergleichsweise langsamen Reaktionszeiten eingestellt werden können. Um dennoch eine vergleichsweise flexible und in kurzen Zeiträumen veränderbare Betriebsweise des Verbrennungsmotors 22 selbst bei der Nutzung von Biogas als Brennstoff zu ermöglichen, ist in die die Biogasanlage 46 mit der Brennstoffzuführleitung 30 verbindende Zweigleitung 44 ein Pufferspeichertank 52 für Biogas geschaltet. Dieser kann bedarfsabhängig mit Druckerhöhung oder im Durchlauf betrieben werden, so dass abhängig vom gewünschten und eingestellten Betriebszustand das in der Biogasanlage 46 erzeugte Biogas direkt der Brennstoffzuführleitung 30 zugeführt oder alternativ in den Pufferspeichertank 52 eingespeichert werden kann.

Weiterhin ist der Verbrennungsmotor 22 brennstoffeingangsseitig über die Brennstoffzuführleitung 30 über eine Zweigleitung 54 mit einer Anzahl weiterer Brennstofftanks für weitere Brennstoffe wie beispielsweise Flüssiggas, Heizöl, Kohlegas und/oder Wasserstoff, in der Figur symbolisiert durch den weiteren Tank 56, verbunden. Insbesondere bei der Nutzung von Wasserstoff als Energieträger kann das Gesamtsystem dabei in vorteilhafter Ausgestaltung dafür ausgelegt sein, dass bei überschüssigem Leistungsangebot des Windrades 4, das aktuell im Netz nicht benötigt wird, Wasserstoff erzeugt und für eine spätere Verbrennung im Verbrennungsmotor 22 geeignet zwischengespeichert wird.

Die zweite Energiewandlereinheit 20 ist gezielt als Ergänzung für die erste Energiewandlereinheit 2 ausgestaltet und ausgelegt, so dass durch die Kombination der Energiewandlereinheiten 2, 20 miteinander eine den aktuellen Vorgaben entsprechende Abgabe und Einspeisung elektrischer Leistung in das Energieversorgungsnetz 14 möglich ist, selbst wenn aufgrund der Umgebungsbedingungen eine vergleichsweise stark schwankende Erzeugungsrate elektrischer Leistung in der ersten Energiewandlereinheit 2 vorliegt. Dazu ist die erste Energiewandlereinheit 2 an sich unterdimensioniert in dem Sinne ausgelegt und konzipiert, dass ihre Leistungsabgabe die vom Netz angeforderte Leistung selbst im Vollast-Modus nicht überschreitet. Damit ist erreicht, dass unter normalen Betriebsbedingungen zur Abgabe der vom Netz angeforderten Leistung die zweite Energiewandlereinheit 20 im Wesentlichen immer - wenn auch in geringem Umfang - mitläuft.

Zu diesen Zwecken umfasst die Kraftwerksanlage 1 eine Steuerungseinheit 60, die zur Einstellung einer insgesamt bedarfsgerecht gewählten Leistungsabgabe der Kraftwerksanlage 1 an das Energieversorgungsnetz 14 ausgelegt ist. Die Steuerungseinheit 60 ist dazu über eine Signalleitung 62 mit einem an der Stromeinspeiseleitung 12 angeordneten Sensor 64 und über eine Signalleitung 66 mit einem an der Zwischenleitung 28 angeordneten Sensor 68 verbunden. Der Sensor 64 gibt dabei über die Signalleitung 62 einen für die aktuell von der ersten Energiewandlereinheit 2 in das Energieversorgungsnetz 14 eingespeiste elektrische Leistung (oder den elektrischen Strom) charakteristischen Messwert an die Steuerungseinheit 60 aus. Analog gibt der Sensor 68 über die Signalleitung 66 einen für die aktuell von der zweiten Energiewandlereinheit 20 in das Energieversorgungsnetz 14 eingespeiste elektrische Leistung (oder den elektrischen Strom) charakteristischen Messwert an die Steuerungseinheit 60 aus. In der Steuerungseinheit 60 wird sodann aus diesen beiden Messwerten anhand eines Soll-Ist-Vergleichs mit dem in der Steuerungseinheit 60 vorliegenden Sollwert für die insgesamt in das Netz einzuspeisende Leistung ermittelt, um welches Ausmaß die aktuell von der ersten Energiewandlereinheit 2 in das Energieversorgungsnetz 14 eingespeiste elektrische Leistung den aktuellen Bedarfswert für die Einspeiseleistung unterschreitet. Anhand dieser Daten wird in der Steuerungseinheit 60 ein Steuersignal für die zweite Energiewandlereinheit 20 ermittelt, mit dem diese zur Abgabe des fehlenden Leistungsbetrags angesteuert wird, so dass das Energieversorgungsnetz 14 geeignet eingestellt werden kann.

Dazu ist die Steuerungseinheit 60 signalausgangsseitig über eine Steuerleitung 69 mit dem dem Verbrennungsmotor 22 zugeordneten Einspritzsystem verbunden. Die Steuerungseinheit 60 stellt somit in Abhängigkeit von der von der ersten Energiewandlereinheit 2 über die Stromeinspeiseleitung 12 abgegebenen elektrischen Leistung - und im Ausführungsbeispiel zusätzlich auch in Abhängigkeit von der von der zweiten Energiewandlereinheit 20 abgegebenen elektrischen Leistung - den Brennstoffzustrom in den der zweiten Energiewandlereinheit 20 zugeordneten Verbrennungsmotor 22 ein.

Zudem ist der Verbrennungsmotor 22, wie vorstehend beschrieben, brennstoffeingangsseitig an eine Mehrzahl von Brennstoffzuleitungen, nämlich im Ausführungsbeispiel die Zweigleitungen 40, 44, 48, 54 angeschlossen, die voneinander unterschiedliche Brennstoffe führen. In jede der Zweigleitungen 40, 44, 48, 54 ist jeweils ein eigenständig ansteuerbares Stellventil 70, 72, 74, 76 geschaltet, wobei die Steuerungseinheit 60 signalausgangsseitig über Signalleitungen 80, 82, 84, 86 mit jedem der Stellventile 70, 72, 74, 76 verbunden ist. Die Steuerungseinheit 60 ist dabei dafür ausgelegt, in Abhängigkeit vom aktuellen Last- und Bedarfszustand, insbesondere in Abhängigkeit von der von der ersten Energiewandlereinheit 2 über die Stromeinspeiseleitung 12 abgegebenen elektrischen Leistung, und unter Berücksichtigung der aktuellen Leistungsanforderung im Energieversorgungsnetz 14 das Verhältnis der dem Verbrennungsmotor 22 zugeführten unterschiedlichen Brennstoffe einzustellen.

Der dabei zugrunde gelegte Sollwert für die insgesamt von der Kraftwerksanlage 1 in das Energieversorgungsnetz einzuspeisende Gesamtleistung köntne dabei fest in der Steuerungseinheit 60 hinterlegt oder auch aktuell vom Bedienpersonal vor Ort einstellbar sein. Im Ausführungsbeispiel ist aber die besonders bevorzugte Ausführungsform gezeigt, bei der die Steuerungseinheit 60 zur Bildung eines Netzverbundes signaleingangsseitig über eine Signalleitung 90 mit einem Datennetz 92 verbunden ist. Das Datennetz 92, an das noch eine Reihe weiterer Kraftwerksanlagen, ggf. vom vorstehen beschriebenen Typ, ggf. aber auch anderen Typs, angeschlossen sind, umfasst eine Steuerungszentrale 94, die beispielsweise in einem Energieversorgungsunternehmen lokalisiert sein kann. Von der Steuerungszentrale 94 aus wird über das Datennentz 92 und insbesondere über die Signalleitung 90 der Steuerungseinheit 60 der Kraftwerksanlage 1 der Sollwert für die insgesamt aktuell in das Energieversorgungsnetz 14 einzuspeisende elektrische Leistung übermittelt, so dass von der Ferne aus in der Art eines Fernzugriffs die azugebende Gesamtleistung vorgegeben werden kann. Damit kann der Sollwert bedarfsabhängig im Sinne eines überörtlichen Netzmanagements von der überörtlichen Steuerungszentrale 94 aus, von der aus vorzugsweise eine Mehrzahl von Kraftwerksanlagen der genannten Art gemeinsam und abgestimmt aufeinander gesteuert werden, jeweils aktualisiert vorgegeben und eingestellt werden. Damit und ggf. über eine geeignete zusätzliche zentrale Kontroll- und Regelfunktion der Steuereinheit kann damit beispielsweise ein Energieversorgungsunternehmen eine oder mehrere Kraftwerksanlagen der genannten Art gesamtheitlich oder als Verbund derart ansteuern, dass eine bedarfsgerechte, falls gewünscht auf das Gesamtnetz bezogen konstante Energieversorgung gewährleistet ist.

### Bezugszeichenliste

- 1: Kraftwerksanlage
- 2: Energiewandlereinheit
- 4: Windrad
- 6: Rotor
- 8: Antriebswelle
- 10: Generator
- 12: Stromeinspeiseleistung
- 14: Energieversorgungsnetz
- 20: Energiewandlereinheit
- 22: Verbrennungsmotor
- 24: Antriebswelle
- 26: Generator
- 28: Zwischenleitung
- 30: Brennstoffzuführsystem
- 32: Luft-Zuführungsleitung
- 34: Abgasleitung
- 40: Zweigleitung
- 42: Erdgastank
- 44: Zweigleitung
- 46: Biogasanlage
- 48: Zweigleitung
- 50: Tank
- 52: Pufferspeichertank
- 54: Zweigleitung
- 56: Tank
- 60: Steuerungseinheit
- 62, 66: Signalleitung
- 64, 68: Sensor
- 69: Steuerleitung
- 70, 72, 74, 76: Stellventil
- 80, 82, 84, 86: Signalleitungen
- 90: Signalleitung
- 92: Datennetz
- 94: Steuerungszentrale

## Patentansprüche

1. Stationäre Kraftwerksanlage (1) zur Stromerzeugung mit einer ersten, zur Umwandlung von natürlicherweise vorhandener Energie wie beispielsweise Wind-, Sonnen-, Wärme- oder Wasserenergie in elektrischen Strom ausgestalteten Energiewandlereinheit (2), die sekundärseitig über eine Stromeinspeiseleitung (12) an ein Energieversorgungsnetz (14) angeschlossen ist, mit einer zweiten Energiewandlereinheit (20), die zur Umwandlung von in einem Brennstoff enthaltener Energie in elektrischen Strom einen von einem Verbrennungsmotor (22) angetriebenen Generator (26) umfasst, der ausgangsseitig ebenfalls an das Energieversorgungsnetz (14) angeschlossen ist, und mit einer Steuerungseinheit (60), die den Brennstoffzustrom in den der zweiten Energiewandlereinheit (20) zugeordneten Verbrennungsmotor (22) in Abhängigkeit von der von der ersten Energiewandlereinheit (2) über die Stromeinspeiseleitung (12) abgegebenen elektrischen Leistung einstellt.

2. Kraftwerksanlage (1) nach Anspruch 1, deren zweite Energiewandlereinheit (20) als Blockheizkraftwerk ausgestaltet ist.

3. Kraftwerksanlage (1) nach Anspruch 1 oder 2, bei der der Verbrennungsmotor (22) der zweiten Energiewandlereinheit (20) zum Betrieb mit Heizöl, Flüssiggas, Pflanzenöl, Wasserstoff und/oder Erdgas ausgelegt ist.

4. Kraftwerksanlage (1) nach einem der Ansprüche 1 bis 3, bei der der Verbrennungsmotor (22) der zweiten Energiewandlereinheit (20) zum Betrieb mit Biogas ausgelegt ist.

5. Kraftwerksanlage (1) nach Anspruch 4, bei der der Verbrennungsmotor (22) der zweiten Energiewandlereinheit (20) brennstoffeingangsseitig mit einer Biogasanlage (46) verbunden ist.

6. Kraftwerksanlage (1) nach Anspruch 5, bei der in die verbindende Zweigleitung (44) Biogasanlage (46) mit dem Verbrennungsmotor (22) ein Pufferspeichertank (52) für Biogas geschaltet ist.

7. Kraftwerksanlage (1) nach Anspruch 4 oder 5, deren Verbrennungsmotor (22) brennstoffeingangsseitig mit einem Speichertank (50) für Pflanzenöl und/oder mit einem Speichertank (42) für Erdgas und/oder mit einem Tank (56) für einen Brennstoff wie Wasserstoff, Flüssiggas, Kohlegas oder Heizöl verbunden ist.

8. Kraftwerksanlage (1) nach einem der Ansprüche 1 bis 7, bei der der Verbrennungsmotor (22) der zweiten Energiewandlereinheit (20) brennstoffeingangsseitig an eine Mehrzahl von Brennstoffzuleitungen angeschlossen ist, die voneinander unterschiedliche Brennstoffe führen, wobei in jede Brennstoffzuleitung jeweils ein eigenständig ansteuerbares Stellventil (70, 72, 74, 76) geschaltet ist, und wobei die Steuerungseinheit (60) signalausgangsseitig mit jedem der Stellventile (70, 72, 74, 76) verbunden ist.

9. Kraftwerksanlage (1) nach Anspruch 8, deren Steuerungseinheit (60) das Verhältnis der dem Verbrennungsmotor (22) zugeführten unterschiedlichen Brennstoffe in Abhängigkeit von der von der ersten Energiewandlereinheit (2) über die Stromeinspeiseleitung (12) abgegebenen elektrischen Leistung einstellt.
